(19) Europäisches Patentamt
European Patent Office
Office européen des brevets

(11) Numéro de publication: **0 340 129 A1**

(12) # DEMANDE DE BREVET EUROPEEN

(21) Numéro de dépôt: **89420153.2**

(22) Date de dépôt: **27.04.89**

(51) Int. Cl.[4]: **C 09 C 1/30**
C 09 C 3/12, C 08 K 9/06,
C 08 L 83/04

(30) Priorité: **28.04.88 FR 8805952**

(43) Date de publication de la demande:
**02.11.89 Bulletin 89/44**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Joachim, Francis**
**93 Montée Bon Accueil**
**F-38200 Vienne (FR)**

**Lagarde, Robert**
**5 rue des Lilas**
**F-69320 Feyzin (FR)**

(74) Mandataire: **Vogt, Bernard et al**
**RHONE-POULENC CHIMIE Service Brevets Chimie**
**Centre de Recherches des Carrières B.P. 62**
**F-69192 Saint-Fons Cédex (FR)**

(54) **Silice de précipitation hydrophobe à propriétes améliorées.**

(57) Silice de précipitation caractérisée en ce qu'elle a un indice de méthanol supérieur à 20, de préférence supérieur à 25, une luminance Y supérieure à 84, une surface spécifique BET supérieure à 50 $m^2/g$, une granulométrie moyenne comprise entre 0,1 et 20 microns et en ce qu'elle est traitée par un mélange d'hexaméthylcyclotrisiloxane ($D_3$) et d'octaméthylcyclotétrasiloxane ($D_4$), en absence de composé de l'étain.

Compositions pour EVC contenant de telles silices et élastomères (vulcanisats) obtenus avec ces compositions.

EP 0 340 129 A1

## Description

### SILICE DE PRECIPITATION HYDROPHOBE A PROPRIETES AMELIOREES

La présente invention se rapporte à une silice de précipitation, utilisable notamment pour la préparation de compositions pour élastomères silicones vulcanisables à chaud, ainsi qu'à un procédé de préparation d'une telle silice de précipitation.

Il est connu de préparer des compositions pour élastomères silicones vulcanisables à chaud à partir de silice de combustion. De façon générale les silices de combustion donnent satisfaction du point de vue technique pour cette application et sont traitées (pour les rendre hydrophobes) avant leur introduction dans les compositions, par un polysiloxane, de préférence par des cyclopolysiloxanes, notamment par un cyclotétrasiloxane, et plus spécialement par de l'octaméthylcyclotétrasiloxane ($D_4$), vers 400 °C. Des brevets mentionnant ce genre de traitement sont connus, notamment par le :

- brevet français FR-A-1 234 245 de la Société RHONE-POULENC, dans lequel, à l'exemple 2, on traite la silice de combustion par du $D_4$ à 375 °C, ainsi que par le
- brevet français FR-A-1 520 663 de la même Société, dans lequel (voir exemple 1), on opère à une température de 500 °C.

Il est d'autre part connu par les exemples 2, 3 et 5 de la demande de brevet FR-A-2 411 157 que de la silice obtenue par pyrogénation (combustion) peut être traitée pour la rendre hydrophobe par un mélange d'hexaméthylcyclotrisiloxane ($D_3$) et de ($D_4$), en présence de composé de l'étain. Cette demande de brevet FR-A-2 411 157 précise en outre à la page 6, dans les essais comparatifs $C_1$ à $C_5$ que la silice de pyrogénation traitée à 200 °C avec le mélange $D_3 + D_4$ mais sans composé de l'étain (voir $C_1$ à $C_4$) ou sans composé acide (voir $C_5$), ne présente pas de caractère hydrophobe. Il est mentionné de plus dans la description à la page 3, lignes 31 à 35, que ce traitement peut avoir lieu à des températures comprises entre 50 et 350 °C.

A l'heure actuelle on cherche à utiliser le plus possible de la silice de précipitation à la place, (en tout ou partie), de la silice de combustion, car la silice de précipitation est moins chère. Or il s'avère que, contrairement aux silices de combustion, les silices de précipitation disponibles actuellement sur le marché, et soumises à un traitement notamment par l'octaméthylcyclotétrasiloxane ($D_4$) à 400 °C perdent leur blancheur initiale ; elles grisaillent. Ceci est gênant car les élastomères obtenus à partir de compositions renfermant de telles silices de précipitation sont eux-mêmes grisaillants et ils ne peuvent être incolores, ou avoir des couleurs franches lorsque des pigments ont été introduits dans de telles compositions. Il s'avère de plus qu'en traitant une silice de précipitation par un mélange $D_3 + D_4$ à une température de 290 °C ou plus que cette silice perd sa blancheur initiale de la même manière que lorsqu'elle est traitée par du $D_4$ à 400 °C.

Un but de la présente invention est donc une silice de précipitation hydrophobe qui peut être utilisée comme charge de renforcement dans des compositions pour élastomères silicones vulcanisables à chaud (EVC), les élastomères obtenus n'ayant pas de teintes grisaillantes, lorsque ces dernières ne sont pas souhaitées. Plus particulièrement un but de la présente invention est une silice de précipitation hydrophobe permettant l'obtention d'élastomères vulcanisables à chaud ayant des couleurs franches.

Un autre but de la présente invention est une silice hydrophobe permettant l'obtention d'élastomères vulcanisables à chaud (EVC) ayant des propriétés méchaniques semblables à celles d'EVC obtenus à partir de silice de combustion.

Un autre but de la présente invention est un procédé permettant l'obtention de cette silice de précipitation hydrophobe et non "grisaillante".

Il a maintenant été trouvé et c'est ce qui fait l'objet de la présente invention, une silice de précipitation caractérisée en ce qu'elle a un indice de méthanol supérieur à 20, de préférence supérieur à 25, une luminance supérieure à 84 (c'est à dire comprise entre 84 et 100), une surface spécifique BET supérieure à 50 $m^2/g$, une granulométrie moyenne comprise entre 0,1 et 20 microns et en ce qu'elle est traitée par un mélange d'hexaméthylcyclotrisiloxane ($D_3$) et d'octaméthylcyclotétrasiloxane ($D_4$), en absence de composé de l'étain.

L'objet de la présente invention concerne également un procédé d'obtention des silices selon l'invention, ainsi que des compositions pour EVC contenant de telles silices, et les élastomères (vulcanisats) obtenus avec ces compositions.

Pour mesurer la luminance Y de la silice de précipitation selon la présente invention il a été opéré de la façon suivante. On se sert du photocolorimètre TRISTIMULUS de marque ELREPHO fabriqué par la firme CARL ZEISS et permettant la mesure de la réflexion diffuse (éclairage diffus/observation 0 °). Cet appareil bien connu des personnes s'occupant de colorimétrie comprend une sphère d'intégration et deux sources lumineuses (lampes à filament de tungstène) qui illuminent l'échantillon à analyser disposé dans une cuve que l'on a placée dans la partie inférieure de cette sphère d'intégration, qui comprend à cet endroit une fenêtre de mesure ayant un diamètre de 35 mm (millimètres). Cet échantillon réfléchit cette lumière au travers du filtre Y positionné dans la partie supérieure de la sphère d'intégration et on mesure cette intensité lumineuse (composante verte de l'échantillon) après qu'elle ait traversé ce filtre Y par mise au zéro de l'aiguille du galvanomètre de l'appareil, grâce à un tambour tournant gradué. Il ne reste plus qu'à lire sur la tambour gradué la valeur obtenue, correspondant à la luminance Y de l'échantillon qu'on analyse, ce tambour ayant été étalonné préalablement à la mesure de l'échantillon, par exemple grâce à un étalon secondaire (VITROLITHE) dont on connaît la valeur de la luminance Y par rapport au sulfate de baryum dont la luminance Y est égale à 100. Ainsi avec cet appareil, un échantillon aussi blanc que le sulfate de baryum aura une luminance Y de 100,

tandis qu'un échantillon rigoureusement noir aura une luminance Y de 0, les valeurs intermédiaires à ces deux bornes correspondant à toutes les nuances de gris. Les cuves dans lesquelles sont disposés les échantillons dont on veut mesurer la luminance Y sont livrées par CARL ZEISS avec l'appareil ELREPHO. Ces curves permettent d'obtenir des échantillons (de poudre) dont le diamètre est de 40 mm et dont la hauteur est de 3 à 5 mm. Les échantillons à mesurer ont ainsi tous les mêmes dimensions.

Pour mesurer l'hydrophobie des silices (bioxydes de silicium) de précipitation selon la présente invention on a choise comme test l'indice de méthanol, tel que décrit dans le FR-A-2 411 156 (pages 4-5) déjà cité.

Cette valeur est déterminée de la façon suivante :

On disperse sur 50 ml d'eau 0,5 g du bioxyde de silicium à essayer. A l'aide d'une burette dont la pointe plonge dans l'eau, on ajoute du méthanol à l'eau, tout en agitant, jusqu'à ce qu'environ 95 % en poids du bioxyde de silicium soient immergés. L'indice de méthanol est la consommation de méthanol en ml.

Les silices de précipitation selon la présente invention sont obtenues (après leur avoir fait subir le traitement $D_3 + D_4$) à partir de silices de précipitation actuellement disponsibles sur le "marché" ou à partir de la silice de précipitation fabriquée par la Société RHONE-POULENC selon l'exemple 1 du brevet français FR-A-2 471 947. La granulométrie de la silice utilisée est de 1,5 microns et sa surface BET de 175 $m^2$. A titre de silice de précipitation disponible actuellement sur le marché on peut citer:

- la silice de précipitation, référence FK 160, commercialisée par la société DEGUSSA, de granulométrie moyenne égale à 6 microns, de surface spécifique BET égale à 160 $m^2/g$,
- la silice de précipitation, référence NIPSIL LP, co mercialisée par la Société NIPPON SILICA, de granulométrie moyenne égale à 10 microns et de surface spécifique BET de 150 $m^2/g$.

Les silices de précipitation selon la présente invention ont une surface BET supérieure à 50 $m^2/g$, de préférence comprise entre 50 et 350 $m^2/g$. Elles ont une granulométrie moyenne comprise entre 0,1 et 20 microns, avanteugesement comprise entre 0,5 et 10 microns.

Les silices de précipitations selon la présente invention ont une hydrophobie (hydrofugation) exprimée en indice de méthanol supérieure à 20, de préférence à 25 et ont une blancheur, exprimée en luminance Y supérieure à 84.

Les silices de précipitation selon la présente invention ont un nombre de groupements

```
   |
 - Si - O - (D)
   |
```

fixés par nanomètre carré ($nm^2$) de silice supérieur à 1,5 de préférence compris entre 2 et 5.

Pour l'obtention des silices de précipitation selon la présente invention on opère par exemple de la façon suivante en laboratoire. On se sert d'un appareil cylindrique en verre ou en inox dont la diamètre interne est par exemple de 66 mm, cet appareil comportant dans sa partie inférieure un verre fritté (n° 2) et au-dessous de ce dernier au moins deux tubulures, une pour le passage de l'azote et une autre pour le passage du mélange $D_3 + D_4$. La silice de précipitation à traiter est placée sur le verre fritté. Cet appareil (dont l'axe longitudinal est disposé verticalment) comprend un agitateur métallique pour remuer la silice. Cet appareil comprend dans sa partie haute une tubulure permettant le passage de l'azote et du mélange $D_3 + D_4$ (non fixé sur la silice) dans un cyclone en verre dans lequel les gas arrivent tangentiellement et ont ainsi une circulation circulaire permettant dans la partie inférieure du cyclone le dépôt de la petite partie de silice éventuellement entrainée par le courant gazeux. Dans la partie supérieure du cyclone (et en son centre) se trouve une tubulure permettant le passage des gaz (azote + $D_3 + D_4$) au travers d'un condenseur (réfrigérant) dans lequel circule de l'eau à 20 °C. A la sortie du condenseur on recueille les parties de produits condensés.

La température de l'appareil est maintenue entre 230 et 280 °C, de préférence entre 240 et 260 °C, grâce à un four électrique.

On charge dans l'appareil cylindrique par exemple 30 g de silice de précipitation et on fait circuler un courant d'azote compris entre 5 et 20 l/h (litres par heure) et un mélange de $D_3 + D_4$ à un débit compris entre 5 et 40 g/h (grammes par heure). Le mélange de $D_3 + D_4$ se vaporise instantanément (puisque l'appareil est chauffé) dès sa sortie de la tubulure débouchant sous le verre fritté. Le mélange $D_3 + D_4$ comprend en poids 5 à 35 parties de $D_3$ pour 100 parties de mélange $D_3$ + D4 ) (de 5 à 35 % en poids de $D_3$). Le mélange gazeux circule au contact de la silice de précipitation entre 30 minutes et 10 heures, de préférence entre 1 heure et cinq heures.

Industriellement ce traitement de la silice de précipitation peut être réalisé par exemple en lit fluidisé ou sous courant gazeux pulsé en utilisant des appareils classiques déjà utilisés pour le traitement de charge. On peut notamment citer les appareils décrits dans les brevets français FR-A-1 234 245 et FR-A-1 520 663 de la Société RHONE-POULENC.

Les élastomères silicones vulcanisables à chaud, obtenus avec les silices de précipitation selon l'invention ont des couleurs franches, c'est-à-dire non "grisaillantes" lorsqu'on a ajouté des pigments à leur composition, ou sont translucides ou transparents (sans être gris) lorsque les compositions ne comportent pas de pigments. Il a été constaté que les meilleures qualités mécaniques de ces élastomères vulcanisables à chaud appelés aussi vulcanisats, ont été obtenues avec une silice de précipitation selon l'invention ayant une

granulométrie moyenne de 1 à 7 microns.

Les élastomères vulcanisables à chaud (vulcanisats) obtenus avec la silice de précipitation selon la présente invention ont une luminance Y d'au moins 47. Ces mesures de luminance Y sont effectuées avec le photomètre ELREPHO décrit plus haut et en suivant le même mode d'étalonnage, sur des vulcanisats ayant une épaisseur de 2 mm que l'on a disposés chacun sur un support étalonné (VITROLITHE Y = 77,85), les mesures ayant été effectuées dès que les vulcanisats ont été démoulés et refroidis.

Les compositions siloxaniques permettant l'obtention des élastomères vulcanisés à chaud (vulcanisats) ayant des propriétés ci-avant comprennent en poids :

a) - 100 parties d'une gomme diorganopolysiloxanique ayant une viscosité supérieure à 1 000 000 mPa.s à 25 °C,

b) - 0,1 à 7 parties d'un péroxyde organique,

c) - 5 à 150 parties d'une silice de précipitation selon la présente invention.

Cette gomme diorganopolysiloxane, citée en a), de viscosité supérieure à 1 000 000 mPa.s à 25 °C, est formée d'un enchaînement de motifs de formule $R_2SiO$, bloquée à chaque extrémité de sa chaîne par un motif de formule $R_3SiO_{0,5}$ et/ou un radical de formule OR' ; dans ces formes les symboles R, identiques ou différents, représentent des radicaux méthyle, éthyle, n-propyle, phényle, vinyle et trifluoro-3,3,3 propyle au moins 60% de ces radicaux étant méthyle et au plus 3 % étant vinyle, le symbole R' représente un atome d'hydrogène, un radical alcoyle ayant de 1 à 4 atomes de carbone, le radical bétaméthoxy-éthyle.

Ces compositions comprennent de préférence de plus d) de 0,5 à 15 parties d'une huile diorganopolysiloxane de viscosité au plus de 5 000 mPa.s à 25 °C formée d'un enchaînement de motifs de formule $R''_2SiO$ bloquée à chaque extrémité de sa chaîne par un radical de formule OR' ; dans ces formules les symbols R'', identiques ou différents, représentent des radicaux méthyle, phényle, vinyle, au moins 40 % de ces radicaux étant méthyle et le symbole R' a la signification donnée ci-avant dans a).

Les différents constituants de ces compositions sont explicités plus en détail ci-dessous.

Les gommes diorganopolysiloxanes a) de viscosité supérieure à 1 000 000 mPa.s à 25 °C, de préférence supérieure à 2 000 000 mPa.s à 25 °C, sont des polymères linéaires, de poids moléculaire élevé, dont la chaîne diorganopolysiloxane est constituée essentiellement des motifs de formule précitée $R_2SiO$ ; cette chaîne est bloquée à chaque extrémité par des motifs de formules $R_3SiO_{0,5}$ et/ou le radical de formule OR'. La présence, le long de la chaîne diorganopolysiloxane, de faibles quantités de motifs autres que $R_2SiO$, par exemple de formules $RSiO_{1,5}$ et/ou $SiO_2$ n'est cependant pas exclue dans la proportion d'au plus 2 % par rapport au nombre de motifs $R_2SiO$. Bien que la signification des radicaux R et R' soit explicitée ci-dessus, on doit préciser que par radical alcoyle, on entend des radicaux alcoyles en $C_1$-$C_4$ et plus spécialement les radicaux méthyle, éthyle, n-propyle et n-butyle.

A titre d'exemples concrets de motifs de formules $R_2SiO$ et $R_3SiO_{0,5}$ et de radicaux de formule OR', peuvent être cités ceux de formules :

$(CH_3)_2SiO$, $CH_3(CH_2 = CH)SiO$, $CH_3(C_6H_5)SiO$, $(C_6H_5)_2SiO$,
$CH_3(C_2H_5)SiO$, $(CH_3CH_2CH_2)CH_3SiO$, $CH_3(n.C_3H_7)SiO$,
$(CH_3)$ $(C_6H_5)$ $(CH_2 = CH)SiO_{0,5}$,
$-OH$, $-OCH_3$, $-OC_2H_5$, $-O-n.C_3H_7$, $-O-iso.C_3H_7$, $-O-n.C_4H_9$,
$-OCH_2CH_2OCH_3$.

Ces gommes a), qui peuvent être utilisées en mélange pour représenter les 100 parties de gomme des compositions selon la présente invention, comprennent généralement moins de 3 % de groupements vinyle et le plus souvent ces groupements vinyle représentent de 0,005 à 1,5 % du nombre de radicaux liés aux atomes de silicium.

Les gommes a) sont commercialisées par les fabricants de silicones ; d'autres parts, elles peuvent être fabriquées en opérant selon les techniques déjà connues.

L'huile diorganopolysiloxane citée en d) est utilisée à raison de 0 à 15 parties, de préférence de 0,3 à 12 parties pour 100 parties de gomme a). Cette huile ou ces huiles sont des polymères linéaires de viscosité relativement peu élevée, au plus 5 000 mPa.s à 25 °C, de préférence au plus 4 000 mPa.s à 25 °C, dont la chaîne diorganopolysiloxanique est formée essentiellement des motifs de formule précitée R'' SiO ; cette chaîne est bloquée à chaque extrémité par un radical de formule précitée OR'. Au moins 40 % des radicaux R'' sont des radicaux méthyle, de préférence au moins 45 %.

La signification des symboles R'' et R' a été explicitée précédemment.

A titre d'exemples concrets de motifs de formule $R''_2SiO$ et de radicaux de formule OR', peuvent être cités ceux de formules :

$(CH_3)_2SiO$, $CH_3(CH_2 = CH)SiO$, $CH_3(C_6H_5)SiO$, $(C_6H_5)_2SiO$,
$C_6H_5$ $(CH_2 = CH)SiO$
$-OH$, $-OCH_3$, $-OC_2H_5$, $-O-n.C_3H_7$, $-OCH_2CH_2OCH_3$.

De préférence, sont utilisées :

- des huiles diméthylpolysiloxanes bloquées à chaque extrémité de leur chaîne par des radicaux hydroxyle, méthoxyle, bétaméthoxyéthoxyle, de viscosité 10 à 200 mPa.s à 25 °C ;
- des huiles méthylphénylpolysiloxanes, constituées de motifs $CH_3(C_6H_5)SiO$, bloquées à chaque extrémité de leur chaîne par des radicaux hydroxyle et/ou méthoxyle, de viscosité 40 à 2 000 mPa.s à 25 °C.

L'utilisation de ces huiles d) a pour objet d'empêcher les compositions de l'invention de subir une évolution au cours du stockage, et plus précisément de se structurer, de durcir ; ce sont donc des agents

"antistructures". Leur utilisation est surtout recommandée lorsque les quantités de silices renforçantes c) sont élevées, par exemple au-dessus de 30-40 parties pour 100 parties de gommes a).

D'autres agents "antistructures" peuvent remplacer en totalité ou en partie, les huiles d), par exemple le diphénylsilanediol et les silanes de formules :

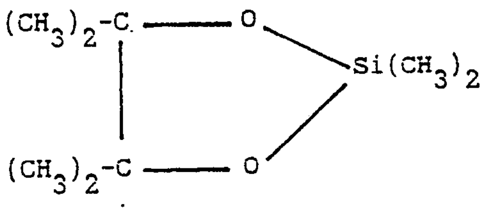

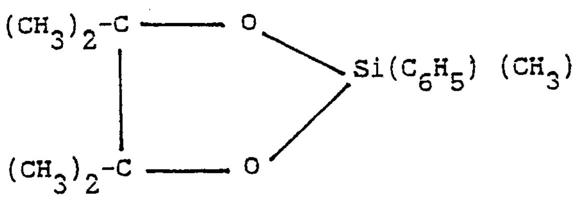

Cependant, ils sont souvent plus coûteux et/ou exigent plus de travail pour leur dispersion dans les compositions de l'invention que les huiles d).

Les péroxydes organiques b) sont utilisés à raison de 0,1 à 7 parties, de préférence 0,2 à 5 parties, pour 100 parties des gommes a). Il sont bien connus des techniciens et comprennent plus spécialement le péroxyde de benzoyle, le péroxyde de dichloro-2,4 benzoyle, le péroxyde de dicumyle, le bis(t-butylpéroxy)2,5 hexane, le perbenzoate de t-butyle, le carbonate de péroxy t-butyle et d'isopropyle, le péroxyde di-t-butyle, le bis (t-butylpéroxy)-1,1 triméthyl-3,3,5 cyclohexane, le diméthyl-2,5 di-(tertiobutyl peroxy-2,5) hexane.

Ces divers péroxydes se décomposent à des températures et à des vitesses parfois différentes. Ils sont choisis en fonction des conditions de durcissement exigées.

Ces compositions permettant l'obtention de vulcanisats non grisaillants peuvent comprendre de plus, 0,02 à 4 parties (pour 100 parties de gomme a)), de préférence 0,03 à 3 parties d'un composé organosilicique comportant, relié à l'atome de silicium, au moins un groupe acryloyloxyalkylène au métharcryloyloxyalkylène, ledit composé ayant la formule :

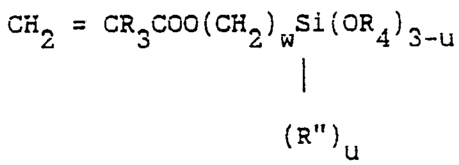

dans laquelle le symbole R″ représente des radicaux méthyle, phényle, vinyle, le symbole $R_3$ représente un atome d'hydrogène, le radical méthyle, le symbole $R_4$ représente un radical méthyle, éthyle, n-propyle, bétaméthoxyéthyle, le symbole w représente un nombre de 1 à 5 et le symbole u représente un nombre de 0 à 2.

Des produits de ce type sont décrits, par exemple dans le brevet américain US-A-3 567 497. A titre d'exemples concrets peuvent être cités les produits ayant les formules suivantes :

$CH_2 = CH\text{-}COOCH_2Si(OCH_3)_3$

$CH_2 = CH\text{-}COOCH_2Si(OCH_2CH_2OCH_3)_2C_6H_5$

$CH_2 = CH\text{-}COO(CH_2)_3Si((OC_2H_5)_3$

$CH_2 = C(CH_3)COO(CH_2)_3Si(OCH_3)_3$

$CH_2 = C(CH_3)COO(CH_2)_3SiCH_3(OCH_3)_2$

$CH_2 = C(CH_3)COO(CH_2)_5Si(OCH_3)_3$

La préparation de ces compositions s'effectue à l'aide de moyens mécaniques connus, par exemple de pétrins, de mélangeurs à cylindres, de mélangeurs à vis. Les divers constituants sont incorporés dans ces appareils dans un ordre pouvant être quelconque. Il est toutefois recommandé de charger tout d'abord les gommes a) et la silice de précipitation c) selon la présente invention, puis de charger en dernier lieu le péroxyde b).

<u>- EXEMPLES :</u>

De la silice de précipitation référence RP 175 MS, fabriquée par la Société RHONE-POULENC selon l'exemple 1 du brevet français FR-A-2 471 947, de granulométrie moyenne égale à 1,5 micron et de surface

BET égale à 175 $m^2/g$ a été traitée respectivement :
- par du $D_4$ à 400 °C pendant 2 heures,
- par du $D_4$ à 250 °C, pendant 2 heures,
- par un mélange $D_3$ + $D_4$, à 250 °C, pendant 4 heures.

Dans chacun de ces traitements, la quantité de silice utilisée était de 30 g. L'appareil employé est celui en verre mentionné dans la description ci-avant. L'agitateur tournait à 90 tours à la minute. Le débit d'azote était de 15 l/h (litres à l'heure) tandis que le débit de $D_4$ ou de $D_3$ + $D_4$ était de 20 g/h. Pour le traitement par $D_3$ + $D_4$ ce mélange comportait en poids 33 parties de $D_3$ et 67 parties de $D_4$.

Des élastomères (vulcanisats) ont été préparés à partir de chacune de ces silices ayant subi un traitement différent. Ces vulcanisats ont été réalisés en mélangeant (en poids) sur un mélangeur tricylindres, à température ambiante :
- 100 parties d'une gomme diorganopolysiloxane, de viscosité 5 millions de mPa.s (millipascals.seconde) à 25 °C, bloquée à chaque extrémité de sa chaîne par un motif triméthylsiloxy, comportant 0,2 % en mole de groupement méthylvinylsiloxy dans sa chaîne,
- 40 parties de la silice RP 175 MS ayant subi un des 3 traitements mentionnés ci-avant,
- 1,4 partie d'une huile diméthylpolysiloxane de viscosité 40 mPa.s à 25 °C, bloquée à chaque extrémité de sa chaîne par un radical hydroxyle lié à l'atome de silicium terminal,
- 0,5 partie de diméthyl-2,5 di(tertiobutylperoxy-2,5)hexane.

Le mélange obtenu est alors vulcanisé 10 minutes à 170° C sous 150 bars et on obtient des échantillons dont l'épaisseur est de 2 mm.

Le tableau ci-après précise les propriétés des silices RP 175 MS obtenues après traitement par $D_4$ (à 400 °C et à 250 °C) ou par $D_3$ + $D_4$ (à 250 °C), ainsi que les propriétés des vulcanisats obtenues avec des silices.

TABLEAU

| Produit(s) utilisé(s) pour le traitement | D4 | D4 | D3 + D4 |
|---|---|---|---|
| Température de traitement | 400 °C | 250 °C | 250°C |
| % de carbone fixé sur la silice après traitement | 1,9 | 1,3 | 2,0 |
| Nombre des groupements D fixés sur la silice par n m | 2,9 | 1,9 | 3,1 |
| Indice de méthanol de la silice traitée | 37 | 15 | 38 |
| Luminance Y de la silice initiale | 96 | 96 | 96 |
| Luminance Y de la silice traitée | 75 | 90 | 92 |
| VULCANISATS (élastomères) | | | |
| DS (A) | 47 | 51 | 46 |
| AR | 420 | 260 | 430 |
| RR (MPa) | 5,2 | 3,4 | 4,9 |
| RD (kN/m) | 15,5 | 11,5 | 15,0 |
| DRC (%) | 15 | 32 | 20 |
| Résistivité (en ohm.cm) | 2,0x10 | 1,1x10 | 2,3x10 |
| Luminance Y du vulcanisat avec silice non traitée | 52 | 52 | 52 |
| Luminance Y du vulcanisat avec silice traitée | 38 | 48 | 50 |

Dans ce tableau les abréviations ont la signification suivante :

- D.S.A. : dureté Shore A selon la norme ASTMD 2240,
- R.R. : résistance à la rupture en MPa (mégapascals) selon la norme AFNOR T 46002 correspondant à la norme ASTMD 412,
- A.R. : allongement à la rupture en % selon la norme AFNOR T 46002,
- R.D. : résistance à la déchirure en KN/m (kilo newton-mètre) selon la norme ASTM D 624,
- D.R.C. : Déformation rémanente à la compression mesurée en %.

Ce tableau montre que la silice de précipitation RP 175 MS ayant subi le traitement $D_3 + D_4$ à 250 °C (c'est-à-dire dans l'intervalle des températures revendiqué) a une luminance Y supérieure à 84 et un indice de méthanol supérieur à 20, tandis que la même silice traitée par le $D_4$ à 400 °C a un indice de méthanol sensiblement identique mais une luminance bien plus faible, et que la silice traitée par le $D_4$ à 250 °C a une luminance Y un peu plus faible et un indice de méthanol bien plus faible.

Ce tableau montre également que le vulcanisat obtenu avec la silice traitée par $D_3 + D_4$ à 250 °C a la meilleure luminance Y et des propriétés mécaniques correspondant aux propriétés du vulcanisat obtenu avec la silice traitée par $D_4$ à 400 °C.

Il est à noter que des résultats analogues sont obtenus avec la silice de précipitation référence FK 160 commercialisée par la Société DEGUSSA, de granulométrie moyenne égale à 6 microns.

D'autre part si on traite la silice de précipitation FK 160 ou RP 175 MS par $D_3 + D_4$ à une température supérieure à 280 °C la luminance Y d'une telle silice est inférieure à 84 et le vulcanisat obtenu a une luminance inférieure à 47. Si par contre on traite ces silices par $D_3 + D_4$, à une température inférieure à 230 °C, les propriétés mécaniques des vulcanisats sont moins bonnes et l'indice de méthanol de cette silice est inférieur à 20.

**Revendications**

1. - Silice de précipitation, caractérisée en ce qu'elle a un indice de méthanol supérieur à 20, de préférence supérieur à 25, une luminance Y supérieure à 84, une surface spécifique BET supérieure à 50 $m^2/g$, une granulométrie moyenne comprise entre 0,1 et 20 microns et en ce qu'elle est traitée par un mélange d'hexaméthylcyclotrisiloxane ($D_3$) et d'octaméthylcyclotétrasiloxane ($D_4$), en absence de composé de l'étain.

2. - Silice de précipitation selon la revendication 1, caractérisée en ce qu'elle est traitée par un mélange $D_3 + D_4$ à une température comprise entre 230 et 280 °C, en ce que sa surface spécifique BET est comprise entre 50 et 350 $m^2/g$ et ce que sa granulométrie moyenne est comprise entre 0,5 et 10 microns.

3. - Silice de précipitation selon l'une quelconque des revendications précédentes, caractérisée en ce qu'elle est traitée avec un mélange de $D_3 + D_4$ comprenant en poids 5 à 35 parties de $D_3$ pour 100 parties du mélange de $D_3 + D_4$.

4. - Silice selon l'une quelconque des revendications précédentes, caractérisée en ce qu'elle est traitée pendant 30 minutes à 10 heures par le mélange $D_3 + D_4$, de préférence entre 1 heure et 5 heures.

5. - Silice selon l'une quelconque des revendications précédentes, caractérisée en ce que la silice est traitée par un mélange $D_3 + D_4$ en présence d'azote.

6. - Silice de précipitation selon la revendication 5, caractérisée en ce que 30 g de silice sont traités simultanément par 5 à 40 g/h de $D_3 + D_4$, ce mélange contenant en poids de 5 à 35 % de $D_3$ et par 5 à 20 l/h d'azote, pendant 30 minutes à 10 heures.

7. - Silice de précipitation selon l'une quelconque des revendications précédentes, caractérisée en ce que le nombre de groupements D fixés par n $m^2$ (nano métre carré) de silice est compris entre 1,5 et 5.

8. - Utilisation de la silice de précipitation selon l'une quelconque des revendications 1 à 7 pour le renforcement d'élastomères organopolysiloxanes vulcanisables à chaud.

9.- Composition organopolysiloxane vulcanisable à chaud, caractérisée en ce qu'elle comprend en poids.

- a) 100 parties d'une gomme diorganopolysiloxane ayant une viscosité supérieure à 1 000 000 mPa.s à 25 °C,
- b) 0,1 à 7 parties d'un peroxyde organique
- c) 5 à 150 parties d'une silice de précipitation selon l'une quelconque des revendications 1 à 7,
- d) de 0 à 15 parties d'une huile diorganopolysiloxanique de viscosité au plus 5 000 mPa.s à 25 °C formée d'un enchaînement de motifs de formule $R''_2SiO$ bloquée à chaque extrémité de sa chaîne par un radical de formule OR' ; dans ces formules les symboles R'', identiques ou différents,

représentent des radicaux méthyle, phényle, vinyle, au moins 40% de ces radicaux étant méthyle et le symbole R′ représente un atome d'hydrogène, un radical alcoyle ayant de 1 à 4 atomes de carbone, le radical bétaméthoxy-éthyle.

10. - Vulcanisat obtenu avec la composition selon la revendication 9, caractérisée en ce qu'il a une luminance Y d'au moins 47.

Office européen des brevets

# RAPPORT DE RECHERCHE EUROPEENNE

Numero de la demande

EP 89 42 0153

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | FR-A-2 411 157 (WACKER-CHEMIE)<br>--- | | C 09 C 1/30<br>C 09 C 3/12<br>C 08 K 9/06<br>C 08 L 83/04 |
| A | US-A-3 948 676 (S. LAÜFER)<br>----- | | |
| | | | **DOMAINES TECHNIQUES RECHERCHES (Int. Cl.4)** |
| | | | C 09 C<br>C 08 K<br>C 08 L |

Le présent rapport a été établi pour toutes les revendications

| Lieu de la recherche | Date d'achèvement de la recherche | Examinateur |
|---|---|---|
| LA HAYE | 14-06-1989 | VAN BELLINGEN I.C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant